(19) Europäisches Patentamt
European Patent Office
Office européen des brevets

(11) **EP 1 711 303 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(21) Anmeldenummer: **05701198.3**

(22) Anmeldetag: **27.01.2005**

(51) Int Cl.:
*B23K 26/24* (2006.01)    *B23K 26/32* (2006.01)
*B23K 26/42* (2006.01)    *B21B 1/22* (2006.01)

(86) Internationale Anmeldenummer:
**PCT/EP2005/000766**

(87) Internationale Veröffentlichungsnummer:
**WO 2005/075141 (18.08.2005 Gazette 2005/33)**

(54) **VERFAHREN ZUR TOPOGRAPHIEÄNDERUNG MIT LASERSTRAHL VON BESCHICHTETEN BLECHEN UND BESCHICHTETES BLECH MIT EINER TOPOGRAPHIEÄNDERUNG**

METHOD FOR MODIFYING THE TOPOGRAPHY OF COATED SHEET METAL USING A LASER BEAM AND COATED SHEET METAL WITH A TOPOGRAPHICAL MODIFICATION OF THIS TYPE

PROCEDE POUR MODIFIER PAR RAYON LASER LA TOPOGRAPHIE DE TOLES REVETUES ET TOLE REVETUE A MODIFICATION TOPOGRAPHIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.02.2004   DE 102004005358**

(43) Veröffentlichungstag der Anmeldung:
**18.10.2006   Patentblatt 2006/42**

(73) Patentinhaber: **DaimlerChrysler AG**
**70327 Stuttgart (DE)**

(72) Erfinder:
• **BECKER, Wolfgang**
  **89081 Ulm (DE)**
• **BÜHLER, Jens**
  **70599 Stuttgart (DE)**
• **GOTH, Klaus**
  **71067 Sindelfingen (DE)**
• **PÄLMER, Mike**
  **71263 Weil der Stadt (DE)**
• **REINIGER, Claus-Dieter**
  **73630 Remshalden 4 (DE)**
• **ZAUNER, Daniel**
  **89177 Ballendorf (DE)**

(56) Entgegenhaltungen:
WO-A-99/08829        DE-A1- 4 407 190
US-A- 5 236 763        US-A- 6 048 255
US-A1- 2003 230 559        US-B2- 6 670 571

• PATENT ABSTRACTS OF JAPAN Bd. 1999, Nr. 05, 31. Mai 1999 (1999-05-31) -& JP 11 047967 A (NEC CORP), 23. Februar 1999 (1999-02-23) in der Anmeldung erwähnt

EP 1 711 303 B1

**Beschreibung**

Die Erfindung betrifft ein Verfahren zur Laserbearbeitung beschichteter Bleche gemäß dem Oberbegriff des Patentanspruchs 1 und ein beschichtetes Blech gemäß dem Oberbegriff des Patentanspruchs 8. Ein derartiges Verfahren und Blech sind bereits aus der JP 11-047967 bekannt.

Bei vielen beschichteten Blechen, insbesondere bei Zinkbeschichteten Blechen wie sie in der Automobilindustrie Verwendung finden, weist das Beschichtungsmaterial einen deutlich niedrigeren Siedepunkt auf als der Schmelzpunkt des Blechmaterials. Dadurch kommt es beim Laserschweissen derartiger Bleche im Überlapp-Stoß zu explosionsartigen Verdampfungen von Beschichtungsmaterial, welche die Qualität der Verbindung stark beeinträchtigen.

Zur Verbesserung der Verbindungsqualität wurde bereits vorgeschlagen, mittels Abstandhaltern enge Spalten zwischen den Blechen zu erzeugen, in die das verdampfte Beschichtungsmaterial entweichen kann. Geeignete kraterförmige Abstandhalter können gemäß der JP 11-047967 durch Laserbeschuß der Oberfläche erzeugt werden. Gemäß der DE 44 07 190 A1 können mit einem gepulsten Laserstrahl rändelungsartige Abstandhalter hergestellt werden. Möglichkeiten zur Beeinflussung der Geometrie der Abstandhalter werden nicht offenbart.

Nachteilig dabei ist vor allem, dass derartig erzeugte Abstandhalter verhältnismäßig spitz ausfallen. Dadurch drücken sie sich - in Abhängigkeit von den verwendeten Spannkräften - relativ leicht in das zu beabstandende Blech ein oder werden selbst deformiert, wodurch unerwünschte Abweichungen im Blechabstand auftreten. Bei dünnen Blechen kann es auch zu Abzeichnungen der Noppen auf der gegenüberliegenden Seite des zu beabstandenden Bleches kommen.

Die Aufgabe der vorliegenden Erfindung besteht daher darin, die Abweichungen im Blechabstand durch geeignete Formgebung der Abstandhalter zu senken.

Die Erfindung ist in Bezug auf das zu schaffende Verfahren und geeignete Bleche durch die Merkmale der Patentansprüche 1 und 8 wiedergegeben. Die weiteren Ansprüche enthalten vorteilhafte Ausgestaltungen und Weiterbildungen des erfindungsgemäßen Verfahrens und Bleches.

Die Aufgabe wird bezüglich des zu schaffenden Verfahrens erfindungsgemäß dadurch gelöst, dass auf mindestens einer Seite mindestens eines beschichteten Bleches mittels eines Lasers mindestens eine aus der Oberfläche herausragende Topographieänderung erzeugt wird, wobei der Laserstrahl die mindestens eine Topographieänderung erzeugt, indem er durch und/oder um das Zentrum seiner Bearbeitungsfläche eine Bewegung mit transversalen und longitudinalen Komponenten ausführt.

Der Vorteil dieser Ausgestaltung besteht darin, dass eine Bewegung des Laserstrahls innerhalb der Wechselwirkungszone der Schmelze erfolgt und diese dadurch zusätzlich zu der durch die Erwärmung induzierten Durchmischung anregt oder quasi umrührt. Dies führt dazu, dass die resultierende Topographieänderung an ihrer Spitze "balliger" ausgebildet wird, d.h. einen Spitzenradius aufweist, der größer ist als die Höhe der Topographieänderung. Derartige Topographieänderungen sind besser als Abstandhalter geeignet als die vorbekannten, da sie sich aufgrund der "Balligkeit" weniger in das zu beabstandende Blech eindrücken oder selbst deformiert werden und deshalb weniger unerwünschte Abweichungen im Blechabstand auftreten. Außerdem treten auch bei dünnen Blechen keine Abzeichnungen der Topographieänderungen auf der gegenüberliegenden Seite des zu beabstandenden Bleches auf. Ferner weisen beschichtete Bleche mit den erfindungsgemäß erzeugten Topographieänderungen eine bessere Korrosionsbeständigkeit auf als solche mit nach vorbekannten Verfahren hergestellten. Einerseits drückt sich eine ballige Spitze weniger in das zu beabstandende Blech ein und beschädigt daher dessen Beschichtung weniger oder gar nicht. Andererseits ist auch die Einsenkung des Bleches, aus deren Material die herausragende Topographieänderung gebildet wird, grundsätzlich flacher ausgebildet als bei vorbekannten Verfahren und tendiert daher weniger zur Einlagerung von Feuchtigkeit (geringere Kapillaritätswirkung).

Besonders vorteilhaft wird der Laserstrahl mittels einer Scanner-Einrichtung auf die Oberfläche gelenkt. Eine Scanner-Einrichtung ist eine besonders schnelle und flexible Stahlablenk-Einrichtung, beispielsweise ein Spiegelsystem (aus mindestens einem ein- oder mehr-achsig ansteuerbaren schwenkbaren Spiegeln) oder auch akusto-optische Modulatoren.

Der große Vorteil des erfindungsgemäßen Verfahrens gegenüber dem in JP 11-047967 vorgeschlagenen besteht darin, dass die Scanner-Einrichtung gleichmäßig relativ zur Oberfläche eines Bleches bewegt wird und dabei die Scannereinrichtung den Laserstrahl für einen kurzen Bearbeitungszeitraum auf eine Bearbeitungsfläche lenkt und dann sehr schnell auf eine andere Bearbeitungsfläche umlenkt Hierdurch entfallen die für die Umpositionierung des Laserstrahls erforderlichen Zeiten nahezu vollständig. Somit wird eine sehr hohe Auslastung des Lasersystems ermöglicht. Im Gegensatz dazu wird bei einem konventionellem Lasersystem, wie es beispielsweise in der JP 11-047967 zur Anwendung kommt, ein Laserstrahl mittels eines starren Linsensystem auf die Bearbeitungsfläche gelenkt. Für den Übergang zu einer zweiten Bearbeitungsfläche muss das Linsensystem relativ zum Bauteil bewegt werden, währenddessen muss der Laser ausgeschaltet werden. Weiterhin sind die Lage und Anordnung der Topographieänderungen erfindungsgemäß innerhalb des Bearbeitungsbereiches des Laserscanners frei programmierbar. Im Vergleich zum starren Linsensystem muss der Laserscanner nicht über die einzelnen Topographieänderungen positioniert werden, sondern kann in vorteilhafter Weise auf einer optimierten Bahn zwischen den Topographieänderungen geführt werden. Aus diesen Unterschieden resultieren sehr unterschiedliche erforderliche Bearbeitungszeiten: Mittels eines Laserscanners ist die Erzeugung von 30 geeigneten Topographieänderungen in circa 0,3 Sekunden möglich, ein konventionelles System erfordert circa die 10-fache Bearbeitungszeit und ist darüber hinaus auch hinsichtlich der möglichen Bewegungsbahnen wesentlich eingeschränkter während eine Scanner-Einrichtung sämtliche erfindungsgemäßen Bewegungsbahnen leicht und extrem schnell ansteuern kann.

In einer vorteilhaften Ausführungsform des erfindungsgemäßen Verfahrens besteht mindestens ein Blech aus höherfestem Stahl. Der Begriff höherfeste Stähle bezeichnet Stähle mit einer Zugfestigkeit von mehr als 350 Mpa, insbesondere TRIP- und Dual-Phasen-Stähle (Z.B. TRIP700, DP600). Versuche zeigen, dass sich mit den bekannten Verfahren bei derartigen höherfesten Stählen überhaupt keine als Abstandhalter verwertbaren Topographieänderungen erzeugen lassen - wohl aber mit dem erfindungsgemäßen Verfahren.

In einer weiteren vorteilhaften Ausführungsform des erfindungsgemäßen Verfahrens wird der Laserstrahl hinsichtlich seines Leistungs- und/oder Geschwindigkeitsprofils diskontinuierlich gesteuert, d.h. Leistung und/oder Geschwindigkeit der Strahlführung sind nicht über die gesamte Bearbeitungsdauer konstant, sondern weisen mindestens 2 unterschiedliche Werte auf. Beispielsweise wird die Leistung des Laserstrahls zu Beginn seiner Bewegung zur Erzeugung der Topographieänderung erhöht und zum Schluss wieder gesenkt. Oder die Geschwindigkeit wird in der Nähe des Bearbeitungszentrums niedriger gesteuert als in der Peripherie. Auch diese Veränderungen der Laserbearbeitung des Blechs resultieren in steuerbar unterschiedlichen Geometrien der Topographieänderungen.

In einer vorteilhaften Ausführungsform des erfindungsgemäßen Verfahrens ist der Laserstrahl nicht auf die Oberfläche fokussiert. Vorzugsweise befindet sich der Fokus in einer solchen Entfernung von der Oberfläche des zu bearbeitenden Bleches, dass die Bestrahlungsfläche des Lasers auf der Oberfläche dessen Fokusfläche um mindestens 50 Prozent, besser 200 Prozent übersteigt. Eine solche flächige Erwärmung vergleichmäßigt den Aufschmelzvorgang von Beschichtung und Blech und begünstigt die Ausbildung geeigneter Topographieänderungen.

In einer weiteren vorteilhaften Ausführungsform des erfindungsgemäßen Verfahrens beschreibt der Laserstrahl bei seiner Bewegung eine Ellipse, Rosette oder Fermat-Figur. Letztere wird durch die Polargleichung (1) beschrieben:

$$r^2 = a^2 \theta, \quad r = \text{Radius}, \; \theta = \text{Polarwinkel}, \; a = \text{Konstante} \tag{1}$$

Der Vorteil einer Laserstrahlführung nach derartigen Figuren liegt in den geeigneten "balligen" Geometrien der resultierenden Topographieänderungen.

In einer weiteren vorteilhaften Ausführungsform des erfindungsgemäßen Verfahrens erzeugt der Laserstrahl die mindestens eine Topographieänderung auf der ihm abgewandten Seite des mindestens einen Bleches, indem er dieses Blech im Bereich seiner Bearbeitungsfläche durchgehend aufschmilzt. Hierzu ist eine geeignete Bearbeitungszeit bis zum Durchtritt vorzugeben oder auch ein Durchtrittssensor vorzusehen, der die Bearbeitungszeit regelt. Diese Ausgestaltung ermöglicht eine weitere Verfahrensbeschleunigung beim Zusammenschweissen mehrerer Bleche. Bei dem Verfahren gemäß der JP 11-047967 wird zunächst ein einzelnes Blech ausgerichtet und dann werden Topographieänderungen auf dieses Blech aufgebracht, danach wird ein weiteres Blech zugeführt und relativ zu dem ersten ausgerichtet und dann werden beide zusammengepreßt und verschweißt. Vorteilhafter ist es aber, beide Bleche gemeinsam ohne Anpressdruck auszurichten. Mangels Anpressdruck verbleibt ein für die meisten Anwendungen ausreichender Minimalspalt zwischen den Blechen, er kann jedoch auch mittels einer geeigneten Ausrichtvorrichtung gewährleistet werden. Danach werden durch eines oder auch durch beide der Bleche Topographieänderungen gemäß dieser vorteilhaften Ausführungsform des erfindungsgemäßen Verfahrens eingebracht. Danach werden die Bleche zusammengepreßt und miteinander verschweisst. In Anbetracht der hohen Geschwindigkeit verfügbarer Scanner-Einrichtungen und der Erzeugung der Topographieänderungen bedeutet die Einsparung eines Ausrichtvorgangs eine ganz wesentliche Zeitersparnis.

In einer weiteren vorteilhaften Ausführungsform des erfindungsgemäßen Verfahrens wird mindestens ein weiteres Blech mit dem mindestens einen beschichteten Blech derart in Kontakt gebracht, daß die mindestens eine herausragende Topographieänderung die Ausbildung mindestens eines Spaltes zwischen den mindestens zwei Blechen bewirkt, und daß die mindestens zwei Bleche im Bereich des mindestens einen Spaltes miteinander verschweisst werden, derart, daß dabei auftretende Verdampfungsprodukte in den mindestens einen Spalt entweichen können. Die Entweichmöglichkeit für die Verdampfungsprodukte gewährleistet eine wesentlich höhere Qualität der Schweißnaht.

In einer anderen vorteilhaften Ausführungsform des erfindungsgemäßen Verfahrens werden die mindestens zwei Bleche derart miteinander verschweisst werden, daß die entstehende Schweissnaht die vorher erzeugte mindestens eine Topographieänderung zumindest teilweise überschweißt.

Jede derartige Topographieänderung stellt eine Verletzung der Beschichtung dar, da diese infolge der Laserbestrahlung verdampft und das blanke Blechmaterial zurückbleibt. Insbesondere eine Zinkbeschichtung im Automobilbau dient als Korrosionsschutz. Jede Verletzung kann einen Korrosionskeim darstellen. Eine Schweißnaht stellt zwar ebenfalls eine derartige Verletzung dar, sie ist aber für die Verbindung zwingend erforderlich. Dadurch, daß die Schweißnaht über die Topographieänderungen gezogen wird und diese zumindest teilweise ersetzt, wird die Anzahl der möglichen Korrosionskeime vermindert und damit das Korrosionsrisiko gemindert. Für eine nachfolgende Korrosionsschutzbehandlung, insbesondere Galvanisierung, ist die Form der Topographieänderungen wesentlich: Erfindungsgemäß bildet sich ein gleichmäßig konturierter Berg aus, gemäß der JP 11-047967 bildet sich ein Krater aus. Ein Berg weist eine geringere Oberfläche als ein aus der gleichen Materialmenge gebildeter Krater auf und somit eine geringere Angriffsfläche gegenüber Korrosion. Darüber hinaus kann ein Berg auch zwischen zwei Blechen allseitig galvanisiert werden. Ein Krater wird jedoch von dem oben liegenden Blech abgedeckt und kann innen nicht galvanisiert werden. In das Kraterinnere kann während des Zusammenfügens der Bleche Feuchtigkeit gelangen und die Topographieänderung wird zum Korrosionskeim.

Die Aufgabe wird bezüglich des zu schaffenden Bleches erfindungsgemäß dadurch gelöst, dass es mindestens eine aus der Oberfläche herausragenden Topographieänderung aufweist, deren Spitzenradius größer ist als die Höhe der Topographieänderung. Dabei ist die Höhe definiert zwischen der Spitze der Topographieänderung und der tiefsten Stelle der Einsenkung des Bleches, aus deren Material die herausragende Topographieänderung erzeugt wurde.

Derartige Topographieänderungen zeigen die vorstehend beschriebenen Vorteile.

In einer anderen vorteilhaften Ausführungsform des erfindungsgemäßen Bleches weisen Spitzenradius und Höhe der Topographieänderung ein Verhältnis von mindestens 2:1 auf-Daraus resultiert eine stärke "Balligkeit" und somit eine Verstärkung der genannten Vorteile.

In einer alternativen oder additiven Ausführungsform des erfindungsgemäßen Bleches weist dieses ebenfalls mindestens eine aus der Oberfläche herausragende Topographieänderung auf, es besteht jedoch aus höherfestem Stahl.

Versuche haben gezeigt, dass sich mit den vorbekannten Verfahren überhaupt keine als Abstandhalter verwertbaren Topographieänderungen erzeugen lassen - wohl aber mit dem erfindungsgemäßen Verfahren, bei dem der Laserstrahl bewegt wird.

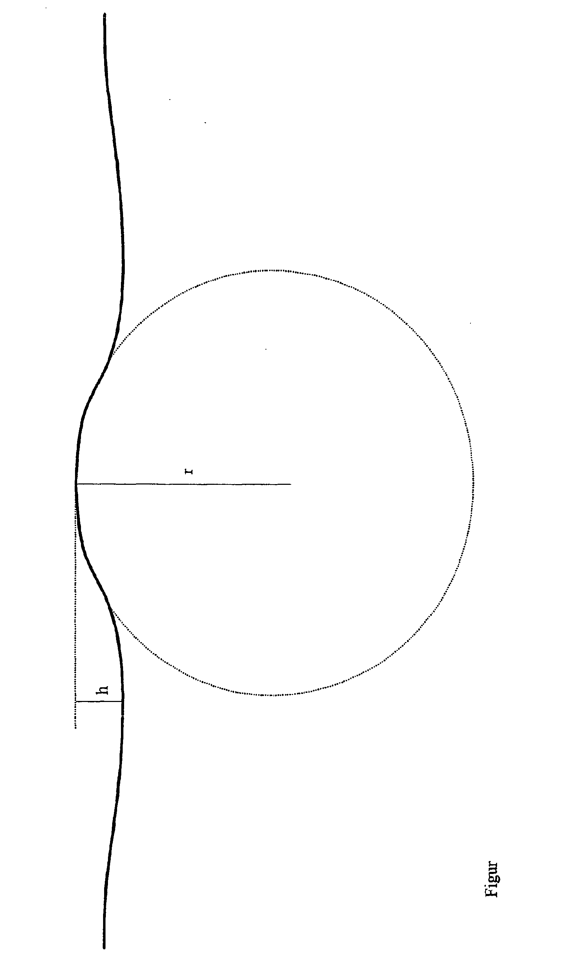

Nachfolgend werden anhand von fünf Ausführungsbeispielen und der Figur das erfindungsgemäße Verfahren und Blech näher erläutert:

Die Figur zeigt schematisch und nicht maßstabsgerecht eine erfindungsgemäß hergestellte Topographieänderung, die an ihrer Spitze "ballig" ausgebildet wird, d.h. einen Spitzenradius r aufweist, der größer ist als die Höhe h der Topographieänderung. Eine Beschichtung ist auf der Figur nicht abgebildet, da diese nur den Bearbeitungsbereich des Laserstrahls zeigt, in dem die Beschichtung bei der Herstellung der Topographieänderung verdampft ist.

In einem ersten Ausführungsbeispiel wird ein elektolytisch verzinktes Stahl-Blech mit einer Dicke von 0,8 mm ausgerichtet, eine Scanner-Einrichtung wird gleichmäßig darüber verfahren und lenkt einen Laserstrahl nacheinander auf mehrere Bearbeitungsflächen. Die Scanner-Einrichtung besteht aus einem zwei-dimensional schwenkbaren computer-gesteuerten Spiegelsystem. Die Scannereinrichtung weist circa 320 mm Abstand zur Oberfläche des Bleches auf, der Laserfokus befindet sich circa 20 mm vor der Oberfläche. Die Scannereinrichtung führt den Laserstrahl mit einer Verfahrgeschwindigkeit von 1,25 m/min zu einer Bearbeitungsfläche. Auf den letzten Mikrometern vor Erreichen der eigentlichen Bearbeitungsfläche wird die Laserleistung innerhalb eines Zeitraums von 5 ms auf eine Bearbeitungsleistung von 3,5 kW erhöht. Danach führt die Scannereinrichtung den Laserstrahl zur Erzeugung der Topographieänderung kreisförmig über die beschichtete Blechoberfläche. Der Kreis weist einen Durchmesser von 0,12 mm auf. Für dessen Bearbeitung werden 24 ms benötigt. Nach Durchlaufen der Kreisbahn führt die Scannereinrichtung den Laserstrahl zur nächsten Bearbeitungsfläche. Nach Verlassen der eigentlichen Bearbeitungsfläche wird die Laserleistung innerhalb eines Zeitraums von 5 ms wieder auf einen vorgebbaren Wert abgesenkt. Durch die Kreisbewegung des Laserstrahls innerhalb der Wechselwirkungszone der Schmelze, d.h. eine Bewegung mit lateralen und longitudinalen Komponenten, wird die Schmelze zusätzlich zu der durch die Erwärmung induzierten Durchmischung angeregt oder quasi umgerührt. Dies führt dazu, dass die resultierende Topographieänderung an ihrer Spitze "balliger" ausgebildet wird, d.h. einen Spitzenradius aufweist, der größer ist als die Höhe (140 $\mu$m) der Topographieänderung. Dies wird durch die Defokussierung des Laserstrahls unterstützt, da dadurch die Erwärmung der Bearbeitungsfläche flächiger und gleichmäßiger erfolgt. Daraus resultiert eine gleichmäßigere Verdampfung der Beschichtung und die Ausbildung einer Topographieänderung in Form eines gleichmäßig konturierten Berges in einer flachen Einsenkung des Bleches. Nach Erzeugung der benötigten Anzahl von Topographieänderungen wird ein zweites Blech zugeführt und ausgerichtet und danach werden beide zusammengepreßt und miteinander verschweißt.

In einem zweiten Ausführungsbeispiel werden Bleche desselben Materials mit einer Dicke von 1,2 mm verwendet. Bei derartigen Blechen ist ein breiterer Abstand zwischen zwei Blechen bis zu 0,3 mm für die Ausbildung einer guten Schweissnaht zulässig. Diese Bleche sollen nach dem Verschweissen einer kathodischen Tauchlackierung unterzogen werden. Dazu ist ein Mindestabstand von 0,2 mm erforderlich. Deshalb werden einige der vorgenannten Laserparameter geändert: Der Kreisdurchmesser beträgt 0,11 mm, die Verfahrgeschwindigkeit des Laserstrahls 0,7 m/min, Die Bearbeitungszeit erhöht sich auf 36 ms. Daraus resultiert eine Topographieänderung mit einer Höhe von 220 $\mu$m, die 200 $\mu$m über das Blech herausragt und so den gewünschten Abstand einstellt.

In einem dritten Ausführungsbeispiel werden zwei elektrolytisch verzinkte Stahl-Bleche mit einer Dicke von 1,2 mm übereinander beabstandet ausgerichtet. Der Laserstrahl weist eine Leistung von 3,5 kW und eine Verfahrgeschwindigkeit von 7 m/min auf. Der Laserstrahl wird von der Scanner-Einrichtung derart geführt, dass er um und durch das Zentrum seiner Bearbeitungsfläche eine enger werdende Spirale mit einem Anfangsdurchmesser von 1,2 mm beschreibt, wobei er das Zentrum nach 5 Umdrehungen erreicht. Dazu benötigt er eine Bearbeitungszeit von 100 ms. Durch die spiralförmige Bewegung von außen nach innen erfolgt eine gleichmäßigere Ausbildung der Topographieänderung auf der Laser-abgewandten Seite des Bleches in Form eines gleichmäßig konturierten Berges. Nach Erzeugung der benötigten Anzahl von Topographieänderungen werden beide Bleche zusammengepreßt und miteinander verschweißt. Dabei wird die Schweißnaht zumindest über einige der Topographieänderungen geführt.

Bei 1,5 mm dicken Blechen ist ein größerer Spiralradius von 1,6 mm erforderlich, für dessen Durchlauf bis zum Zentrum 7 Umdrehungen erforderlich sind. Dadurch erhöht sich die Bearbeitungszeit auf 160 ms pro Topographieänderung auf der auf der Laser-abgewandten Seite des Bleches.

In einem fünften Ausführungsbeispiel wird ein elektrolytisch verzinktes TRIP700-Stahl-Blech mit einer Dicke von 1,0 mm ausgerichtet, eine Scanner-Einrichtung wird gleichmäßig darüber verfahren und lenkt einen Laserstrahl nacheinander auf mehrere Bearbeitungsflächen. Die Scannereinrichtung weist circa 300 mm Abstand zur Oberfläche des Bleches auf, der Laserfokus befindet sich auf der Oberfläche. Die Scannereinrichtung führt den Laserstrahl mit einer Verfahrgeschwindigkeit von 8 m/min zu einer Bearbeitungsfläche. Auf den letzten Mikrometern vor Erreichen der eigentlichen Bearbeitungsfläche wird die Laserleistung innerhalb eines Zeitraums von 5 ms von einer Grundleistung von 1,9 kW auf eine Bearbeitungsleistung von 2,2 kW erhöht. Danach führt die Scannereinrichtung den Laserstrahl zur Erzeugung der Topographieänderung kreisförmig über die beschichtete Blechoberfläche. Der Kreis weist einen Durchmesser von 1,8 mm auf. Für dessen Bearbeitung werden 70 ms benötigt. Nach Durchlaufen der Kreisbahn führt die Scannereinrichtung den Laserstrahl zur nächsten Bearbeitungsfläche. Nach Verlassen der eigentlichen Bearbeitungsfläche wird die Laserleistung innerhalb eines Zeitraums von 5 ms wieder auf einen vorgebbaren Wert abgesenkt. Durch die Kreisbewegung des Laserstrahls innerhalb der Wechselwirkungszone der Schmelze, d.h. eine Bewegung mit lateralen und longitudinalen Komponenten, wird die Schmelze zusätzlich zu der durch die Erwärmung induzierten Durchmischung angeregt oder quasi umgerührt. Dies führt bei diesem höherfestem TRIP700-Stahl-Blech dazu, dass sich eine kraterförmige Topographieänderung ausbildet, deren "ballige" Wände als Abstandhalter fungieren. Nach Erzeugung der benötigten Anzahl von Topographieänderungen wird ein zweites TRIP-Stahl-Blech zugeführt und ausgerichtet und danach werden beide zusammengepreßt und miteinander verschweißt.

Das erfindungsgemäße Verfahren erweist sich in den Ausführungsformen der vorstehend beschriebenen Beispiele als besonders geeignet für das Laserschweißen beschichteter Bleche, insbesondere aus höherfestem Stahl, in der Automobilindustrie.

Insbesondere können so erhebliche Vorteile bezüglich der Bearbeitungszeit erzielt werden. Aber auch der Korrossionsschutz kann durch die verbesserte Form der Topographieänderungen und durch die Führung der Schweißnaht über zumindest einen Teil der Topographieänderungen verbessert werden.

Die Erfindung ist nicht nur auf die zuvor geschilderten Ausführungsbeispiele beschränkt, sondern vielmehr auf weitere übertragbar (siehe auch die Ansprüche).

So ist zum Beispiel denkbar, dass die Scanner-Einrichtung anstatt durch ein Spiegelsystem durch akustooptische Modulatoren auszubilden. Ferner ist es möglich statt den Laserscanner über die Bauteiloberfläche zu führen, die Bauteile unter einem ortsfesten Scanner zu bewegen. Gegebenenfalls können Scanner und Bauteil eine gegenseitig koordinierte Bewegung vollführen.

Auch der Abstand der Scanner-Einrichtung vom Blech und der Grad der Defokussierung oder die genannten Bewegungsmuster sind nicht zwingend und können bei Bedarf, beispielsweise an die Laserleistung oder auch an das Material von Blech und/oder Beschichtung, angepasst werden. Zusätzlich kann es vorteilhaft sein, die Laserleistung während der Bestrahlung in geeigneter Weise zu variieren.

**Patentansprüche**

1. Verfahren zur Laserbearbeitung beschichteter Bleche, bei dem auf mindestens einer Seite mindestens eines Bleches mittels des Lasers mindestens eine aus der Oberfläche herausragende Topographieänderung erzeugt wird, **dadurch gekennzeichnet,** **dass** der Laserstrahl die mindestens eine Topographieänderung erzeugt, indem er durch und/oder um das Zentrum seiner Bearbeitungsfläche eine Bewegung mit transversalen und longitudinalen Komponenten ausführt, derart, **dass** die Topographieänderung einen Spitzenradius aufweist, der größer ist als die Höhe der Topographieänderung, wobei die Höhe von der tiefsten Absenkung des Bleches am Fuß der Topographieänderung bis zu deren Spitze definiert ist.

2. Verfahren nach Anspruch 1,

**dadurch gekennzeichnet,**
**dass** mindestens ein Blech aus höherfestem Stahl besteht

3. Verfahren nach Anspruch 1 oder 2,
   **dadurch gekennzeichnet,**
   **dass** der Laserstrahl hinsichtlich seines Leistungs- und/ oder Geschwindigkeitsprofils diskontinuierlich gesteuert wird.

4. Verfahren nach einem der vorhergehenden Ansprüche,
   **dadurch gekennzeichnet,**
   **dass** der Laserstrahl nicht auf die Oberfläche fokussiert wird.

5. Verfahren nach einem der vorhergehenden Ansprüche,
   **dadurch gekennzeichnet,**
   **dass** der Laserstrahl bei seiner Bewegung eine Ellipse, Rosette oder Fermat-Figur beschreibt.

6. Verfahren nach einem der vorhergehenden Ansprüche
   **dadurch gekennzeichnet,**
   **dass** mindestens ein weiteres Blech mit dem mindestens einen beschichteten Blech derart in Kontakt gebracht wird, dass die mindestens eine herausragende Topographieänderung die Ausbildung mindestens eines Spaltes zwischen den mindestens zwei Blechen bewirkt, und
   **dass** die mindestens zwei Bleche im Bereich des mindestens einen Spaltes miteinander verschweisst werden, derart, dass dabei auftretende Verdampfungsprodukte in den mindestens einen Spalt entweichen können.

7. Verfahren nach Anspruch 6,
   **dadurch gekennzeichnet,**
   **dass** die mindestens zwei Bleche derart miteinander verschweisst werden, dass die entstehende Schweissnaht die vorher erzeugte mindestens eine Topographieänderung zumindest teilweise ersetzt.

8. Beschichtetes Blech mit mindestens einer aus der Oberfläche herausragenden unter Verwendung eines Laserstrahls hergestellten Topographieänderung,
   **dadurch gekennzeichnet,**
   **dass** die unter Verwendung eines Laserstrahls hergestellte Topographieänderung gleichmäßig konturiert ist und einen Spitzenradius aufweist, der größer ist als die Höhe der Topographieänderung, wobei die Höhe von der tiefsten Absenkung des Bleches am Fuß der Topographieänderung bis zu deren Spitze definiert ist.

9. Beschichtetes Blech nach Anspruch 8,
   **dadurch gekennzeichnet,**
   **dass** Spitzenradius und Höhe der Topographieänderung ein Verhältnis von mindestens 2:1 aufweisen.

10. Beschichtetes Blech nach Anspruch 8 oder 9
    **dadurch gekennzeichnet,**
    **dass** das Blech aus höherfestem Stahl besteht.

**Claims**

1. Method for laser-machining of coated metal sheets, in which, on at least one side of at least one metal sheet, a topographical change protruding from the surface is produced by means of the laser, **characterized in that** the laser beam produces the at least one topographical change by performing a motion, containing transverse and longitudinal components, through and/or around the centre of its machining surface such that the topographical change has a tip radius which is greater than the height of the topographical change, the height of the deepest depression of the metal sheet at the foot of the topographical change, up to the tip of the latter, being defined.

2. Method according to Claim 1, **characterized in that** at least one metal sheet consists of higher-strength steel.

3. Method according to Claim 1 or 2, **characterized in that** the laser beam is intermittently controlled with respect to its performance and speed profile.

**4.** Method according to one of the preceding claims, **characterized in that** the laser beam is not focused upon the surface.

**5.** Method according to one of the preceding claims, **characterized in that** the laser beam, in its motion, describes an ellipse, a rosette or a Fermat figure.

**6.** Method according to one of the preceding claims, **characterized in that** at least one further metal sheet is brought into contact with the at least one coated metal sheet such that the at least one protruding topographical change creates at least one gap between the at least two metal sheets, and **in that** the at least two metal sheets are welded together in the region of the at least one gap such that resulting evaporation products can escape into the at least one gap.

**7.** Method according to Claim 6, **characterized in that** the at least two metal sheets are welded together such that the formed weld seam at least partially replaces the at least one topographical change previously produced.

**8.** Coated metal sheet having at least one laser-generated topographical change protruding from the surface, **characterized in that** the laser-generated topographical change is evenly contoured and has a tip radius which is greater than the height of the topographical change, the height of the deepest depression of the metal sheet at the foot of the topographical change, up to the tip of the latter, being defined.

**9.** Coated metal sheet according to Claim 8, **characterized in that** the tip radius and height of the topographical change have a ratio of at least 2:1.

**10.** Coated metal sheet according to Claim 8 or 9, **characterized in that** the metal sheet consists of higher-strength steel.

**Revendications**

**1.** Procédé de traitement au laser de tôles revêtues, selon lequel on produit au moyen du laser sur au moins un côté d'au moins une tôle au moins une modification topographique faisant saillie de la surface,
**caractérisé en ce que** le rayon laser produit la modification topographique au moins unique par le fait qu'il accomplit un déplacement passant par le centre et/ou autour du centre de sa face de traitement, qui possède des composantes transversales et longitudinales, de telle sorte que la modification topographique possède un rayon de pointe qui est supérieur à la hauteur de la modification topographique, sachant que la hauteur est définie depuis la creusure la plus profonde de la tôle à la base de la modification topographique jusqu'à la pointe de cette dernière.

**2.** Procédé selon la revendication 1, **caractérisé en ce qu'**au moins une tôle est constituée d'acier à haute résistance.

**3.** Procédé selon la revendication 1 ou 2, **caractérisé en ce que** le profil de puissance et/ou de vitesse du rayon laser est commandé de manière discontinue.

**4.** Procédé selon l'une quelconque des revendications précédentes, **caractérisé en ce que** le rayon laser n'est pas focalisé sur la surface.

**5.** Procédé selon l'une quelconque des revendications précédentes, **caractérisé en ce que** le rayon laser décrit lors de son déplacement une ellipse, une rosace ou une figure de Fermat.

**6.** Procédé selon l'une quelconque des revendications précédentes, **caractérisé en ce qu'**au moins une autre tôle est amenée en contact avec la tôle revêtue au moins unique de telle sorte que la modification topographique saillante au moins unique produit la formation d'au moins un interstice entre les au moins deux tôles,
et **en ce que** lesdites au moins deux tôles sont, dans la région de l'interstice au moins unique, soudées entre elles de telle sorte que les produits d'évaporation qui surviennent alors peuvent s'échapper dans l'interstice au moins unique.

**7.** Procédé selon la revendication 6, **caractérisé en ce que** lesdites au moins deux tôles sont soudées entre elles de telle sorte que le cordon de soudure obtenu remplace au moins partiellement la modification topographique au moins unique précédemment produite.

**8.** Tôle revêtue avec au moins une modification topographique faisant saillie de la surface, qui est réalisée en utilisant un rayon laser,
**caractérisée en ce que** la modification topographique réalisée en utilisant un rayon laser est réalisée de contour uniforme et présente un rayon de pointe qui est supérieur à la hauteur de la modification topographique, sachant que la hauteur est définie depuis la creusure la plus profonde de la tôle à la base de la modification topographique jusqu'à la pointe de cette dernière.

**9.** Tôle revêtue selon la revendication 8,
**caractérisée en ce que** le rayon de pointe et la hauteur de la modification topographique présentent un rapport d'au moins 2:1.

**10.** Tôle revêtue selon la revendication 8 ou 9,
**caractérisée en ce que** la tôle est constituée d'acier à haute résistance.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11047967 A
- DE 4407190 A1